# EUROPÄISCHE PATENTSCHRIFT

(11) **EP 3 725 433 B1**
(45) Veröffentlichungstag und Bekanntmachung des Hinweises auf die Patenterteilung: **07.06.2023**
(21) Anmeldenummer: 20177792.7
(22) Anmeldetag: 02.03.2018
(51) Int. Cl.: B22F 1/10, B22F 1/103, B22F 3/10, B22F 10/16, B22F 10/34, B22F 10/38, B28B 1/00, C04B 35/638

(54) **VERFAHREN ZUR ADDITIVEN HERSTELLUNG EINES BAUTEILS**
METHOD FOR ADDITIVE MANUFACTURE OF A COMPONENT
PROCÉDÉ DE FABRICATION ADDITIVE D'UN COMPOSANT

(30) Priorität: 28.04.2017 DE 102017207210
(43) Veröffentlichungstag der Anmeldung: 21.10.2020
(62) Teilanmeldung aus: 18708676.4
(73) Patentinhaber: SKZ-KFE gGmbH, 97076 Würzburg (DE)
(72) Erfinder: Fischer, Christian, 97074 Würzburg (DE); Staudigel, Christian, 97070 Würzburg (DE)
(74) Vertreter: Rau, Schneck & Hübner Patentanwälte Rechtsanwälte PartGmbB

(56) Entgegenhaltungen:
- WO-A1-95/30503
- US-A- 6 110 411
- SUBRAMANIAN K ET AL: "SELECTIVE LASER SINTERING OF ALUMINA WITH POLYMER BINDERS", RAPID PROTOTYPING JOURNAL, MCB UNIVERSITY PRESS, BRADFORD, GB, Bd. 1, Nr. 2, 1. Januar 1995 (1995-01-01), Seiten 24-35, XP001155553, ISSN: 1355-2546, DOI: 10.1108/13552549510086844

## Beschreibung

Die vorliegende Patentanmeldung nimmt die Priorität der deutschen Patentanmeldung DE 10 2017 207 210.5 in Anspruch.

Die Erfindung betrifft ein Verfahren zur additiven Herstellung eines Bauteils.

Aus der WO 97/13601 A1 (entspricht DE 696 07 975 T2) ist ein Verfahren zur additiven Herstellung eines Metall-Bauteils bekannt. Durch selektives Lasersintern eines Verbundpulvers wird zunächst ein Formkörper hergestellt. Das Verbundpulver ist beispielsweise ein polymerbeschichtetes Metallpulver, bei dem ein thermoplastisches Polymer Metallsubstratteilchen vollständig bedeckt. Der Formkörper wird anschließend mit einer wässrigen Emulsion infiltriert, die ein wärmehärtendes Polymer und ein Vernetzungsmittel für das wärmehärtende Polymer umfasst. Hierdurch bildet der Formkörper ein starres Gerüst aus. Anschließend wird der Formkörper erwärmt, um das Polymer zu zersetzen und die Metallsubstratteilchen zu sintern. Das durch Sintern erzeugte Metall-Bauteil kann zusätzlich mit einem niedrigschmelzenden Metall, wie beispielsweise Kupfer, imprägniert werden, so dass die Dichte des Metall-Bauteils erhöht wird. Nachteilig ist, dass dieses Verfahren zeitintensiv und aufgrund der erforderlichen Anlagentechnik teuer ist. Zudem weisen die Formteile eine hohe Porosität auf, so dass durch das Sintern eine hohe und nicht einheitliche Schwindung verursacht wird. Durch die nachträgliche Infiltration mit einem niedrigschmelzenden Metall wird die Dichte und Stabilität des Metall-Bauteils zwar erhöht, jedoch weist das Metall-Bauteil im Vergleich zu herkömmlichen Metall-Bauteilen vergleichsweise schlechte thermische und mechanische Eigenschaften auf.

Aus den Druckschriften WO 95/30503 A1, US 2016/0168453 A1 und US 6 110 411 A sowie dem Fachartikel "Selective laser sintering of alumina with polymer binders" von K. Subramanian et al. (Rapid Prototyping Journal, MCB University Press, Bd. 1, Nr. 2 vom 01.01.1995, Seiten 24-35, XP001155553) sind Verfahren zur additiven Fertigung von Bauteilen bekannt.

Der Erfindung liegt die Aufgabe zugrunde, ein einfaches, flexibles und wirtschaftliches Verfahren zur additiven Herstellung eines metallischen und/oder glasartigen und/oder keramischen Bauteils mit einer einstellbaren Dichte und einer einstellbaren thermischen und/oder mechanischen Stabilität zu schaffen. Das Bauteil soll insbesondere eine hohe Dichte und eine hohe thermische und/oder mechanische Stabilität aufweisen.

Diese Aufgabe wird durch ein Verfahren mit den Merkmalen des Anspruchs 1 gelöst. Die metallischen Substratteilchen und/oder die glasartigen Substratteilchen und/oder die keramischen Substratteilchen werden zusammen mit dem mindestens zweiphasigen Binder schichtweise angeordnet. Der Binder ist pulverförmig. Zum Erzeugen des Formteils wird der zwischen den Substratteilchen angeordnete Binder mittels einer elektromagnetischen Strahlung schichtweise selektiv aufgeschmolzen. Der aufgeschmolzene Binder verteilt sich zwischen den Substratteilchen und hält diese nach dem Erstarren zusammen, so dass ein vergleichsweise festes Formteil mit einer geringen Porosität entsteht. Die Porosität ist abhängig von dem Anteil, der Zusammensetzung und der Schmelzeviskosität des Binders. Das mindestens eine Additiv hat einen Anteil in dem Binder von 30 % bis 90 %. Das mindestens eine Additiv dient zur Beeinflussung der rheologischen Eigenschaften des thermoplastischen Polymers bzw. des Binders. Das feste Formteil wird nach Fertigstellung aus den erzeugten und nicht aufgeschmolzenen Schichten entnommen. Das Formteil wird in diesem Zustand als Grünteil bezeichnet. Anschließend wird der Binder aus dem Formteil entfernt. Dadurch, dass der Binder mindestens zweiphasig ausgebildet ist und ein thermoplastisches Polymer und mindestens ein Additiv umfasst, ist die Entbinderung und somit die Porosität des entbinderten Formteils einfach und flexibel einstellbar. Bei dem anschließenden Sintern verbinden sich die Substratteilchen und bilden das Bauteil aus. Das Sintern ist insbesondere ein Festphasensintern.

Durch die verwendeten Substratteilchen und den verwendeten mindestens zweiphasigen Binder ist das Bauteil mit einer gewünschten einstellbaren Dichte und einer gewünschten einstellbaren mechanischen und/oder thermischen Stabilität herstellbar. Der mindestens zweiphasige Binder ermöglicht die Herstellung des Formteils mit einem im Wesentlichen porenfreien und homogenen Gefüge. Durch die bereitgestellte Mischung aus Substratteilchen und dem Binder weist das Formteil eine vergleichsweise hohe Dichte und eine ausreichende Festigkeit auf, um beschädigungsfrei aus dem nicht aufgeschmolzenen Teil der Schichten entnommen und gereinigt zu werden. Durch die Entbinderung wird insbesondere sukzessive der mindestens zweiphasige Binder entfernt, so dass eine mikroporöse Struktur des Formteils entsteht. Die Substratteilchen werden in dem mikroporösen Formteil durch das thermoplastische Polymer zusammengehalten. Das erfindungsgemäße Verfahren ist einfach, flexibel und wirtschaftlich anwendbar. Durch die bereitgestellte Mischung aus Substratteilchen und dem mindestens zweiphasigen Binder und die insbesondere sukzessive Entbinderung des Formteils kann insbesondere die Dichte sowie die mechanische und/oder thermische Stabilität des hergestellten Bauteils eingestellt werden.

Durch das sukzessive Entfernen des mindestens zweiphasigen Binders entsteht eine mikroporöse Struktur des Formteils. Die Substratteilchen werden in dem mikroporösen Formteil durch das thermoplastische Polymer zusammengehalten. Bei der weiteren Entfernung des Binders und der anschließenden Sinterung des mikroporösen Formteils tritt hierdurch eine geringe Schwindung auf, so dass das entstehende Bauteil homogen ausgebildet ist und eine gewünschte, insbesondere hohe Dichte aufweist. Vorzugsweise wird das mindestens eine Additiv, beispielsweise ein Weichmacher, zumindest teilweise vor dem thermoplastischen Polymer aus dem Formteil entfernt. Das mindestens eine Additiv, beispielsweise der Weichmacher, ist insbesondere mittels eines Lösungsmittels löslich, wohingegen das thermoplastische Polymer mittels des Lösungsmittels unlöslich ist. Bei der sukzessiven Entbinderung wird beispielsweise das mindestens eine Additiv mittels des Lösungsmittels weitestgehend aus dem Formteil entfernt. Vorzugsweise wird das Formteil hierzu in das Lösungsmittel getaucht. Das Formteil wird nach der chemischen Entbinderung mittels des Lösungsmittels als Braunteil bezeichnet. Anschließend wird das Formteil bzw. Braunteil beispielsweise thermisch entbindert. Bei der thermischen Entfernung des Binders wird sowohl das in dem Formteil verbliebene mindestens eine Additiv, beispielsweise der Weichmacher, als auch das mittels des Lösungsmittels unlösliche thermoplastische Polymer aus dem Formteil entfernt.

Die Substratteilchen und der Binder bilden Formmassenteilchen aus, wobei die Formmassenteilchen jeweils eine Mehrzahl von Substratteilchen umfassen. Dies gewährleistet eine einfache und flexible Herstellung des Bauteils mit einer einstellbaren Dichte und einer einstellbaren Stabilität. Dadurch, dass die Substratteilchen und der Binder pulverförmige Formmassenteilchen ausbilden, wird eine homogene Mischung aus den Substratteilchen und dem Binder bereitgestellt. Die bereitgestellten Formmassenteilchen umfassen jeweils die metallischen Substratteilchen und/oder die glasartigen Substratteilchen und/oder die keramischen Substratteilchen, die durch den anhaftenden Binder zusammengehalten sind.

Erfindungsgemäß umfassen die Formmassenteilchen jeweils eine Mehrzahl von Substratteilchen. Dies gewährleistet eine einfache, flexible und kostengünstige Herstellung des Bauteils. Der Binder wirkt als Haftvermittler zwischen den das jeweilige Formmassenteilchen bildenden Substratteilchen. Eine Mehrzahl von Substratteilchen pro Formmassenteilchen ermöglicht, dass eine Form der Formmassenteilchen unabhängig von der Form der Substratteilchen ist. So können beispielsweise im Wesentlichen sphärische Formmassenteilchen erzeugt werden, ohne dass die Substratteilchen selbst sphärisch sein müssen. Dies verringert die Herstellungskosten, da die Substratteilchen nicht in Form teurer Pulver mit bestimmter, insbesondere sphärischer, Pulverpartikelgeometrie bereitgestellt werden müssen. Die mittlere Anzahl von Substratteilchen je Formmassenteilchen ist insbesondere mindestens 2, insbesondere mindestens 5, insbesondere mindestens 10, insbesondere mindestens 50, insbesondere mindestens 100, insbesondere mindestens 500, insbesondere mindestens 1.000, insbesondere mindestens 5.000, insbesondere mindestens 10.000, insbesondere mindestens 50.000, insbesondere mindestens 100.000. Die mittlere Anzahl von Substratteilchen je Formmassenteilchen ist insbesondere höchstens 20.000.000, insbesondere höchstens 10.000.000, insbesondere höchstens 5.000.000, insbesondere höchstens 1.000.000, insbesondere höchstens 500.000, insbesondere höchstens 100.000, insbesondere höchstens 50.000, insbesondere höchstens 10.000, insbesondere höchstens 5.000.

Die Mischung aus Substratteilchen und dem mindestens zweiphasigen Binder ist über die Ausbildung der Formmassenteilchen einstellbar, so dass mittels der bereitgestellten Formmassenteilchen insbesondere die Dichte sowie die mechanische und/oder thermische Stabilität des hergestellten Bauteils eingestellt werden kann. Die Formmassenteilchen können in einfacher und wirtschaftlicher Weise als Schichten angeordnet werden. Zum Erzeugen des Formteils wird der Binder der Formmassenteilchen mittels der elektromagnetischen Strahlung schichtweise selektiv aufgeschmolzen. Beispielsweise wird zunächst eine erste Schicht aus Formmassenteilchen auf einen Baugrundkörper aufgebracht und der Binder selektiv mittels der elektromagnetischen Strahlung aufgeschmolzen. Hierzu wird der Baugrundkörper in einer horizontalen x- und einer horizontalen y-Richtung relativ zu der elektromagnetischen Strahlung verlagert. Zum Auftragen einer zweiten Schicht wird der Baugrundkörper relativ zu einer Auftragseinrichtung und relativ zu der elektromagnetischen Strahlung in einer vertikalen z-Richtung verlagert. Nach dem Aufbringen der zweiten Schicht auf die erste Schicht wird der Binder wieder selektiv mittels der elektromagnetischen Strahlung aufgeschmolzen. Hierzu wird der Baugrundkörper in der x- und der y-Richtung relativ zu der elektromagnetischen Strahlung verlagert. Das Auftragen und das selektive Aufschmelzen weiterer Schichten erfolgt entsprechend dem Auftragen und dem selektiven Aufschmelzen der zweiten Schicht so lange, bis das gewünschte Formteil erzeugt ist.

Bevorzugt haben die Formmassenteilchen eine Fließfähigkeit, die durch eine Hausner-Zahl H_{R} nach VDI-Richtlinie VDI 3405 Blatt 1 definiert ist, wobei für die Hausner-Zahl H_{R} gilt: 1 ≤ H_{R} ≤ 1,5, insbesondere 1 ≤ H_{R} ≤ 1,4, und insbesondere 1 ≤ H_{R} ≤ 1,3. Dies gewährleistet eine einfache und flexible Herstellung des Bauteils mit einer einstellbaren Dichte und einer einstellbaren Stabilität. Die Fließfähigkeit bzw. Rieselfähigkeit der pulverförmigen Formmassenteilchen ermöglicht ein gleichmäßiges und homogenes Erzeugen der Schichten. Die Fließfähigkeit bzw. Rieselfähigkeit ist insbesondere als Quotient aus einem Schüttvolumen und einem Stampfvolumen der Formmassenteilchen definiert.

Ein Verfahren nach Anspruch 2 gewährleistet eine einfache und flexible Herstellung des Bauteils mit einer einstellbaren Dichte und einer einstellbaren Stabilität. Die Formmassenteilchen gewährleisten einerseits, dass das Formteil vor der Entbinderung eine einstellbare Porosität und eine einstellbare Dichte aufweist. Andererseits gewährleisten die Formmassenteilchen eine ausreichende Fließfähigkeit bzw. Rieselfähigkeit, so dass diese gleichmäßig und homogen in Schichten angeordnet werden können. Vorzugsweise gelten die Bereiche für die maximale Abmessung Aₘₐₓ für mindestens 90 %, insbesondere für mindestens 95 % der Formmassenteilchen. Die angegebenen Bereiche gelten insbesondere für eine volumenbezogene, kumulative Verteilung der Formmassenteilchen.

Ein Verfahren nach Anspruch 3 gewährleistet eine einfache und flexible Herstellung des Bauteils mit einer einstellbaren Dichte und einer einstellbaren Stabilität. Durch das Verhältnis Aₘᵢₙ/Aₘₐₓ sind die Formmassenteilchen im Wesentlichen kugelförmig ausgebildet. Hierdurch können die Formmassenteilchen gleichmäßig, homogen und mit einer einstellbaren Dichte in Schichten angeordnet werden. Vorzugsweise gelten die angegebenen Bereiche für Aₘᵢₙ/Aₘₐₓ für mindestens 90 %, insbesondere für mindestens 95 % der Formmassenteilchen. Die angegebenen Bereiche gelten insbesondere für eine volumenbezogene, kumulative Verteilung der Formmassenteilchen.

Ein Verfahren nach Anspruch 4 gewährleistet eine einfache und flexible Herstellung des Bauteils mit einer einstellbaren Dichte und einer einstellbaren Stabilität. Durch den Anteil der Substratteilchen sind die Dichte und die Stabilität des Bauteils einstellbar.

Ein Verfahren nach Anspruch 5 gewährleistet eine einfache und flexible Herstellung des Bauteils mit einer einstellbaren Dichte und einer einstellbaren Stabilität. Durch die Schmelzeviskosität des Binders verteilt sich dieser im aufgeschmolzenen Zustand gleichmäßig und homogen zwischen den Substratteilchen und verbindet die einzelnen Substratteilchen bzw. die einzelnen Formmassenteilchen zu einer geschlossenen Formteilschicht, so dass das Formteil erzeugt wird. Durch die gleichmäßige und homogene Verteilung des Binders entsteht nach dem Entfernen des mindestens einen Additivs die mikroporöse Struktur des Formteils bzw. Braunteils. Durch die mikroporöse Struktur wird das Bauteil beim anschließenden Sintern mit einer einstellbaren Dichte und einer einstellbaren Stabilität hergestellt. Durch die Schmelzeviskosität weist der Binder somit eine gewünschte Fließfähigkeit auf. Die Bestimmung der Schmelzeviskosität erfolgt nach DIN EN ISO 3219 (Stand: Oktober 1994). Die angegebenen Werte der Schmelzeviskosität gelten insbesondere für ein Geschwindigkeitsgefälle von 1,00 s⁻¹. Die Temperatur T_{S} ist bei einer amorphen Struktur des Binders die Glasübergangstemperatur und bei einem teilkristallinen Binder die Kristallitschmelztemperatur, insbesondere die maximale Kristallitschmelztemperatur.

Ein Verfahren nach Anspruch 6 gewährleistet eine einfache und flexible Herstellung des Bauteils mit einer einstellbaren Dichte und einer einstellbaren Stabilität. Nach dem Entfernen des mindestens einen Additivs wird die mikroporöse Struktur des Formteils bzw. Braunteils dadurch erzeugt, dass die Substratteilchen mittels des thermoplastischen Polymers zusammengehalten werden. Das thermoplastische Polymer wird anschließend entfernt. Durch den Anteil des thermoplastischen Polymers sind die Dichte und die Stabilität des Bauteils einstellbar. Die angegebenen %-Werte sind Gew.-% oder Vol.-%.

Ein Verfahren nach Anspruch 7 gewährleistet eine einfache und flexible Herstellung des Bauteils mit einer einstellbaren Dichte und einer einstellbaren Stabilität. Durch den Anteil des mindestens einen Additivs sind die rheologischen Eigenschaften des thermoplastischen Polymers bzw. des Binders sowie die Dichte und die Stabilität des Bauteils einstellbar. Die angegebenen %-Werte sind Gew.-% oder Vol.-%.

Ein Verfahren nach Anspruch 8 gewährleistet eine einfache und flexible Herstellung des Bauteils mit einer einstellbaren Dichte und einer einstellbaren Stabilität. Vorzugsweise gelten die angegebenen Bereiche für mindestens 90 %, und insbesondere für mindestens 95 % der Substratteilchen. Die angegebenen Bereiche gelten insbesondere für eine volumenbezogene, kumulative Verteilung der Substratteilchen.

Ein Verfahren nach Anspruch 9 gewährleistet eine einfache, flexible und wirtschaftliche Herstellung des Bauteils. Das thermoplastische Polymer ist in einfacher und wirtschaftlicher Weise an die Substratteilchen und/oder das mindestens eine Additiv anpassbar. Das thermoplastische Polymer ist ausgewählt aus Polykondensaten, Polymerisaten, Polyaddukten und/oder thermoplastischen Elastomeren. Polykondensate sind beispielsweise Polyamide und/oder Polyester. Polymerisate sind beispielsweise Polyolefine, Polystyrene, Polyacrylate, Polyvinylpyrrolidone und/oder Polyoxymethylene. Polyaddukte sind beispielsweise Polyurethane.

Ein Verfahren nach Anspruch 10 gewährleistet eine einfache und wirtschaftliche Herstellung des Bauteils. Dadurch, dass mindestens ein Additiv ein Weichmacher ist, ist die Fließfähigkeit des thermoplastischen Polymers bzw. des Binders in gewünschter Weise einstellbar. Bei dem Weichmacher handelt es sich insbesondere um einen Ester einer aromatischen Hydroxybenzoesäure und vorzugsweise um einen p-Hydroxybenzoesäure-Fettalkoholester, wobei die Länge der Kohlenstoffkette vorzugsweise im Bereich C12-C26, besonders vorzugsweise im Bereich C18-C22 liegt. Mittels des Weichmachers wird insbesondere die Viskosität des thermoplastischen Polymers eingestellt bzw. reduziert. Der Weichmacher umfasst insbesondere mindestens eine weichmachende Substanz. Beispielsweise ist der Weichmacher ein Gemisch aus mehreren weichmachenden Substanzen.

Bevorzugt werden die Schichten mit einer Dicke D aufgebracht, wobei gilt: 0,05 mm ≤ D ≤ 0,3 mm, insbesondere 0,07 mm ≤ D ≤ 0,25 mm, und insbesondere 0,09 mm ≤ D ≤ 0,2 mm. Dies gewährleistet eine einfache und flexible Herstellung des Bauteils mit einer einstellbaren Dichte und einer einstellbaren Stabilität. Durch die Dicke D wird ein zuverlässiges Aufschmelzen des Binders gewährleistet, so dass sich der aufgeschmolzene Binder gleichmäßig und homogen zwischen den Substratteilchen verteilt und nach dem Verfestigen des Binders das Formteil ausgebildet wird. Die Schichten werden mittels einer Auftragseinrichtung auf einen Baugrundkörper bzw. eine zuvor aufgebrachte Schicht aufgebracht. Die Auftragseinrichtung ist beispielsweise als Rakel und/oder Walze ausgebildet.

Ein Verfahren nach Anspruch 11 gewährleistet eine einfache und flexible Herstellung des Bauteils mit einer einstellbaren Dichte und einer einstellbaren Stabilität. Der Baubereich befindet sich oberhalb eines Baugrundkörpers. Der Baubereich wird vorzugsweise mittels mindestens eines Heizelements beheizt. Die Temperatur T_{B} gewährleistet einerseits eine ausreichende Fließfähigkeit bzw. Rieselfähigkeit der pulverförmigen Formmassenteilchen und andererseits eine geringe Schwindung bei dem nachfolgenden Sintern des Formteils. Bei einer amorphen Struktur des Binders ist die Temperatur T_{S} die Glasübergangstemperatur. Bei einem teilkristallinen Binder ist die Temperatur T_{S} die höchste Kristallitschmelztemperatur des Binders. Zur Definition der Glasübergangstemperatur und der Kristallitschmelztemperatur wird verwiesen auf DIN EN ISO 11357 Teil 2 (Stand: Second edition 2013-05-01) und Teil 3 (Stand: Second edition 2011-05-01).

Ein Verfahren nach Anspruch 12 gewährleistet eine einfache und flexible Herstellung des Bauteils mit einer einstellbaren Dichte und einer einstellbaren Stabilität.

Ein Verfahren nach Anspruch 13 gewährleistet eine einfache, flexible und wirtschaftliche Erstellung des Bauteils mit einer einstellbaren Dichte und einer einstellbaren Stabilität. Dadurch, dass das mindestens eine Additiv, beispielsweise ein Weichmacher, mittels des Lösungsmittels löslich ist, wohingegen das thermoplastische Polymer mittels des Lösungsmittels unlöslich ist, ist in einfacher und wirtschaftlicher Weise eine chemische Entbinderung des mindestens einen Additivs möglich. Nach der Entnahme des Formteils aus den erzeugten und nicht aufgeschmolzenen Schichten, wird das mindestens eine Additiv mittels des Lösungsmittels weitestgehend aus dem Formteil entfernt. Vorzugsweise wird das Formteil hierzu in das Lösungsmittel getaucht. Das Formteil wird nach der chemischen Entbinderung mittels des Lösungsmittels als Braunteil bezeichnet. Durch die chemische Entbinderung entsteht eine mikroporöse Struktur des Formteils. Die Substratteilchen werden in dem mikroporösen Formteil durch das thermoplastische Polymer zusammengehalten. Dadurch, dass das thermoplastische Polymer mittels des Lösungsmittels unlöslich ist, wird in einfacher Weise eine sukzessive Entbinderung des Formteils und die Ausbildung der mikroporösen Struktur ermöglicht. Das mindestens eine Additiv, insbesondere der Weichmacher, ist vorzugsweise acetonlöslich, so dass das Entfernen des mindestens einen Additivs mittels des Lösungsmittels einfach und wirtschaftlich ist.

Ein Verfahren nach Anspruch 14 gewährleistet eine einfache und wirtschaftliche Herstellung des Bauteils. Die Temperatur T_{L} ermöglicht einerseits ein schnelles Entfernen des mindestens einen Additivs, beispielsweise eines Weichmachers, aus dem Formteil und gewährleistet andererseits die Formstabilität des Formteils bzw. Grünteils. Das Entfernen des mindestens einen Additivs erfolgt umso schneller, je höher die Temperatur T_{L} ist.

Ein Verfahren nach Anspruch 15 gewährleistet eine einfache und wirtschaftliche Herstellung des Bauteils. Das mindestens eine Additiv, beispielsweise ein Weichmacher, wird vorzugsweise möglichst vollständig mittels des Lösungsmittels entfernt. Hierdurch wird die nachfolgende Entbinderung bzw. thermische Entbinderung vereinfacht. Die angegebenen Werte beziehen sich auf einen Anteil des mindestens einen Additivs in Gew.-% oder Vol.-%.

Ein Verfahren nach Anspruch 16 gewährleistet eine einfache und wirtschaftliche Herstellung des Bauteils. Durch ein Erhitzen des mikroporösen Formteils bzw. des Braunteils nach dem Entfernen des mindestens einen Additivs, beispielsweise eines Weichmachers, wird das thermoplastische Polymer und gegebenenfalls vorhandene restliche Additive bzw. Reste des mindestens einen Additivs aus dem Formteil herausgebrannt. Die erste Temperatur T₁ wird insbesondere in Abhängigkeit des thermoplastischen Polymers gewählt. Das Entfernen des thermoplastischen Polymers bei der Temperatur T₁ erfolgt für eine Zeitdauer Δt₁, die von der Bauteilgeometrie und insbesondere quadratisch von der Wandstärke des herzustellenden Bauteils abhängig ist. Die Zeitdauer Δt₁ wird vorzugsweise so gewählt, dass mindestens 95 %, insbesondere mindestens 99 %, und insbesondere mindestens 99,9 % des Binders entfernt werden.

Bevorzugt erfolgt ein thermisches Entfernen des Binders in einer Inertgas-Atmosphäre oder in einer reduzierten Atmosphäre oder in einem Hochvakuum. Dies gewährleistet eine einfache Herstellung des Bauteils. Durch die Inertgas-Atmosphäre bzw. die reduzierende Atmosphäre bzw. das Hochvakuum werden unerwünschte chemische Reaktionen bei der thermischen Entbinderung vermieden. Die Inertgas-Atmosphäre umfasst insbesondere mindestens ein Edelgas, beispielsweise Helium oder Argon.

Bevorzugt ist nach dem Sintern mindestens 95 %, insbesondere mindestens 99 %, und insbesondere mindestens 99,9 % des Binders aus dem Formteil entfernt. Dies gewährleistet eine einfache und flexible Herstellung des Bauteils mit einer einstellbaren Dichte und einer einstellbaren Stabilität. Durch das Sintern verbinden sich die Substratteilchen, so dass das Bauteil erzeugt wird. Nach dem Sintern ist das Bauteil vorzugsweise vollständig von dem Binder befreit. Hierdurch bildet das Bauteil eine homogene mikroporöse Struktur mit einer gewünschten Dichte aus. Die angegebenen Werte beziehen sich auf einen Anteil des Binders in Gew.-% oder Vol.-%. Bevorzugt erfolgt das Sintern bei einer zweiten Temperatur T₂, wobei für die zweite Temperatur T₂ gilt: 600°C ≤ T₂ ≤ 2400°C, insbesondere 800°C ≤ T₂ ≤ 2200°C, und insbesondere 1100°C ≤ T₂ ≤ 2000°C. Dies gewährleistet eine einfache und flexible Herstellung des Bauteils mit einer einstellbaren Dichte und einer einstellbaren Stabilität. In Abhängigkeit der verwendeten Substratteilchen sind die mechanische Stabilität und die thermische Stabilität gezielt einstellbar. Je nach verwendeten Substratteilchen können Bauteile aus zumindest einem der Materialien Metall, Glas und Keramik hergestellt werden. Bei der Herstellung eines metallischen Bauteils gilt für die zweite Temperatur T₂ vorzugsweise: 600°C ≤ T₂ ≤ 2000°C, insbesondere 800°C ≤ T₂ ≤ 1800°C, und insbesondere 1100°C ≤ T₂ ≤ 1500°C. Bei der Herstellung eines keramischen und/oder glasartigen Bauteils gilt für die zweite Temperatur T₂ vorzugsweise: 600°C ≤ T₂ ≤ 2400°C, insbesondere 800°C ≤ T₂ ≤ 2200°C, und insbesondere 1100°C ≤ T₂ ≤ 2000°C. Das Sintern bei der zweiten Temperatur T₂ erfolgt für eine Zeitdauer Δt₂, die von der Bauteilgeometrie und insbesondere quadratisch von der Wandstärke des herzustellenden Bauteils abhängig ist. Die Zeitdauer Δt₂ ist vorzugsweise so lange, dass durch anschließendes weiteres Sintern keine relevante Änderung der Porosität des Bauteils erzielbar ist. Vorzugsweise erfolgt das Sintern so lange, bis für eine Porosität P gilt: 0,01 ≤ P ≤ 0,15, insbesondere 0,03 ≤ P ≤ 0,12, insbesondere 0,05 ≤ P ≤ 0,09.

Mithilfe des additiven Herstellungsverfahrens gemäß mindestens einem der Ansprüche 1 bis 6 kann ein additiv gefertigtes metallisches und/oder glasartiges und/oder keramisches Bauteil mit einer einstellbaren Dichte und einer einstellbaren mechanischen und/oder thermischen Stabilität geschaffen werden. Das Bauteil weist insbesondere eine hohe Dichte und eine hohe mechanische und/oder thermische Stabilität auf.

Aufgrund des additiven Herstellungsverfahrens gemäß mindestens einem der Ansprüche 1 bis 6 kann das Bauteil aus zumindest einem der Materialien Metall, Glas und Keramik geschaffen werden, wobei in einem Bauteil-Inneren und an einer Bauteil-Oberfläche Poren ausgebildet sind, wobei mindestens 80 %, insbesondere mindestens 85 %, und insbesondere mindestens 90 %, der Poren eine maximale Abmessung zwischen 1 µm und 100 µm, insbesondere zwischen 10 µm und 80 µm, und insbesondere zwischen 20 µm und 60 µm, haben. Aufgrund des additiven Herstellungsverfahrens gemäß mindestens einem der Ansprüche 1 bis 16 weist das Bauteil nach dem Sintern eine mikroporöse Struktur auf. Die mikroporöse Struktur umfasst geschlossene Poren in dem Bauteil-Inneren und offene Poren an der Bauteil-Oberfläche. Die mikroporöse Struktur gewährleistet in Abhängigkeit des verwendeten Materials bzw. der verwendeten Materialien eine einstellbare Dichte und eine einstellbare mechanische und/oder thermische Stabilität.

Bevorzugt gilt für eine Porosität P: 0,01 ≤ P ≤ 0,15, insbesondere 0,03 ≤ P ≤ 0,12, insbesondere 0,05 ≤ P ≤ 0,09. Ein derartiges Bauteil gewährleistet eine einstellbare Dichte und eine einstellbare Stabilität. Die Porosität P ist durch das Verhältnis von Porenvolumen zu Bauteilvolumen definiert. Bevorzugt hat die Bauteil-Oberfläche eine Oberflächenrauheit rz, wobei für die Oberflächenrauheit rz gilt: 5 µm ≤ r_{Z} ≤ 200 µm, insbesondere 10 µm ≤ r_{Z} ≤ 120 µm, und insbesondere 15 µm ≤ r_{Z} ≤ 100 µm. Ein derartiges Bauteil ermöglicht vorteilhafte Anwendungen. Aus der Größe der Poren ergibt sich aufgrund der offenen Poren an der Bauteil-Oberfläche eine Oberflächenrauheit. Die durch die additive Herstellung bedingte Oberflächenrauheit ist für bestimmte Anwendungen, beispielsweise im Bereich von Implantaten, vorteilhaft. Die Oberflächenrauheit rz ist definiert nach DIN EN ISO 4287 (Stand: Oktober 1998) und gemessen über das Tastschnittverfahren nach DIN EN ISO 4288 (Stand: April 1998).

Bevorzugt bilden die Poren an der Bauteil-Oberfläche zumindest teilweise Hinterschnitte aus. Ein derartiges Bauteil ermöglicht vorteilhafte Anwendungen. Durch die additive Herstellung des Bauteils bilden die offenen Poren an der Bauteil-Oberfläche zumindest teilweise Hinterschnitte aus. Diese Hinterschnitte können beispielsweise bei der Verwendung des Bauteils als Implantat zum Anwachsen von Gewebe genutzt werden.

Weitere Merkmale, Vorteile und Einzelheiten der Erfindung ergeben sich aus der nachfolgenden Beschreibung eines Ausführungsbeispiels. Es zeigen:

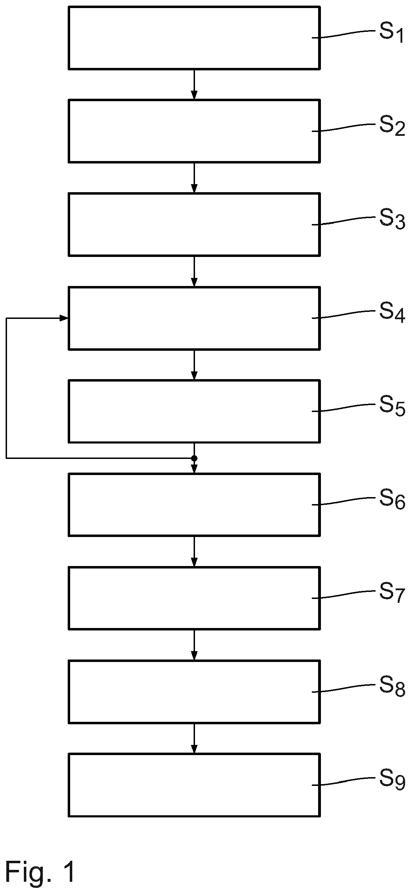

- Fig. 1: ein Ablaufschema eines Verfahrens zur additiven Herstellung eines Bauteils,

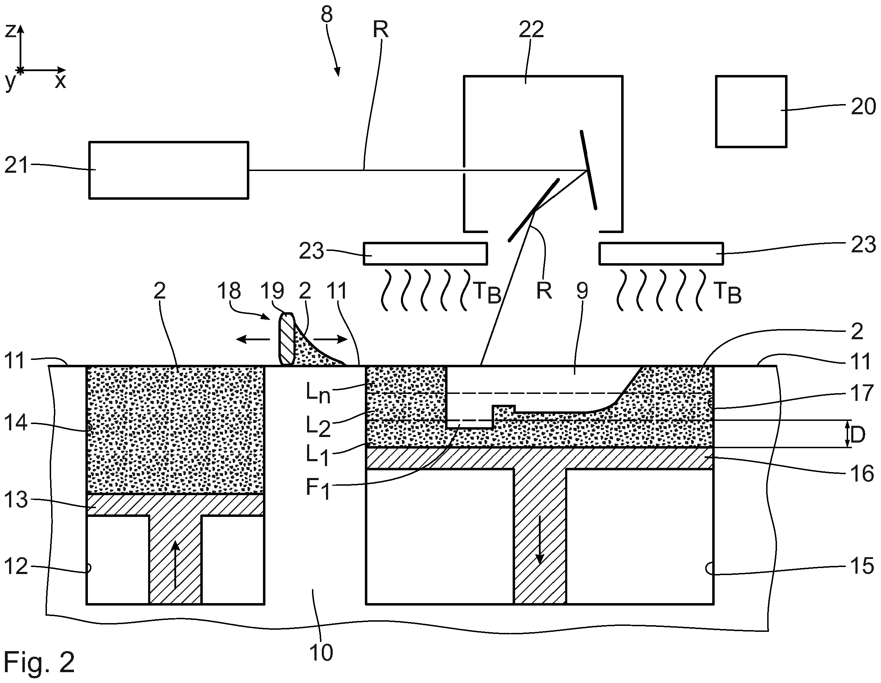

- Fig. 2: eine schematische Darstellung einer Vorrichtung zur additiven Herstellung eines Formteils aus Formmassenteilchen,
- Fig. 3: eine vergrößerte Darstellung eines Bauraums der Vorrichtung in Fig. 2,
- Fig. 4: eine schematische Darstellung eines Formmassenteilchens mit Substratteilchen und einem zweiphasigen Binder,
- Fig. 5: eine volumenbezogene, kumulative Verteilung der Formmassenteilchen,
- Fig. 6: eine schematische Darstellung eines Behälters mit Lösungsmittel zur chemischen Entbinderung des Formteils,

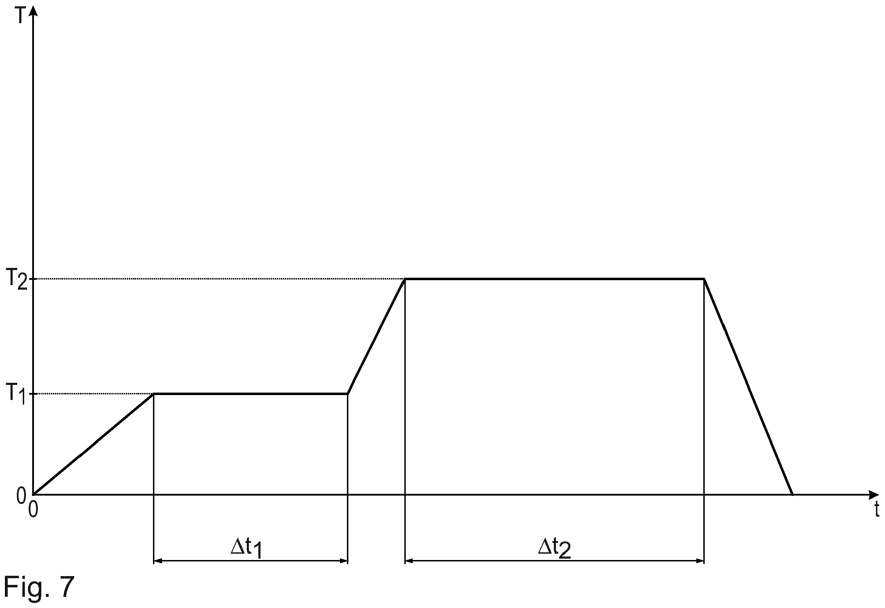

- Fig. 7: einen schematischen Temperaturverlauf zur thermischen Entbinderung und zur Sinterung des Formteils, und

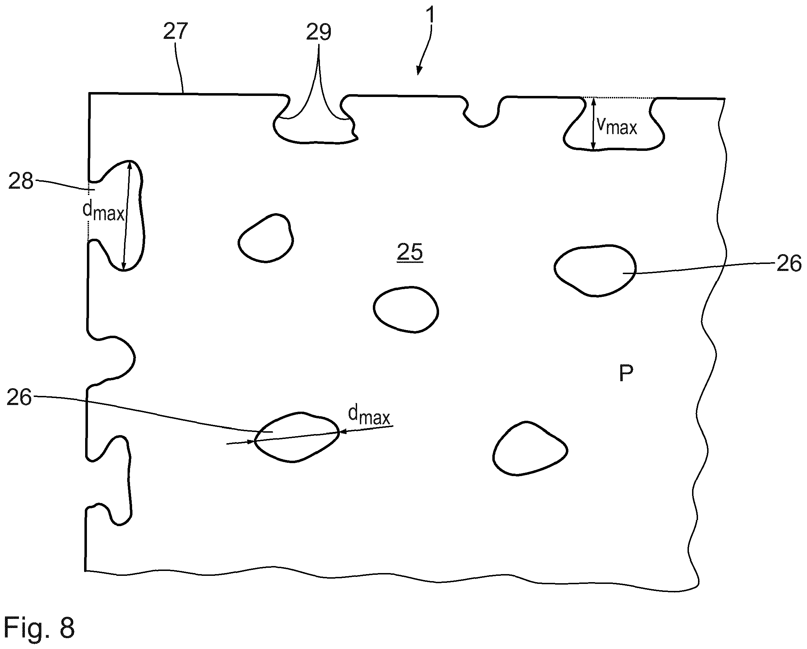

- Fig. 8: einen vergrößerten Teilschnitt eines additiv hergestellten Bauteils nach der Sinterung.

Zur additiven Herstellung eines Bauteils 1 werden in einem Verfahrensschritt S₁ Formmassenteilchen 2 bereitgestellt. Die Formmassenteilchen 2 umfassen jeweils metallische und/oder glasartige und/oder keramische Substratteilchen 3, die mittels eines zweiphasigen Binders 4 aneinander haften. Der zweiphasige Binder 4 umfasst wiederum ein Additiv 5 in Form eines Weichmachers, der mittels eines Lösungsmittels 6 löslich ist, und ein thermoplastisches Polymer 7, das mittels des Lösungsmittels 6 unlöslich ist.

Die Formmassenteilchen 2 haben eine Fließfähigkeit bzw. Rieselfähigkeit, die durch einen Hausner-Faktor H_{R} nach VDI-Richtlinie VDI 3405 Blatt 1 (Stand: Oktober 2013) definiert ist, wobei für den Hausner-Faktor H_{R} gilt: 1 ≤ H_{R} ≤ 1,5, insbesondere 1 ≤ H_{R} ≤ 1,4, und insbesondere 1 ≤ H_{R} ≤ 1,3.

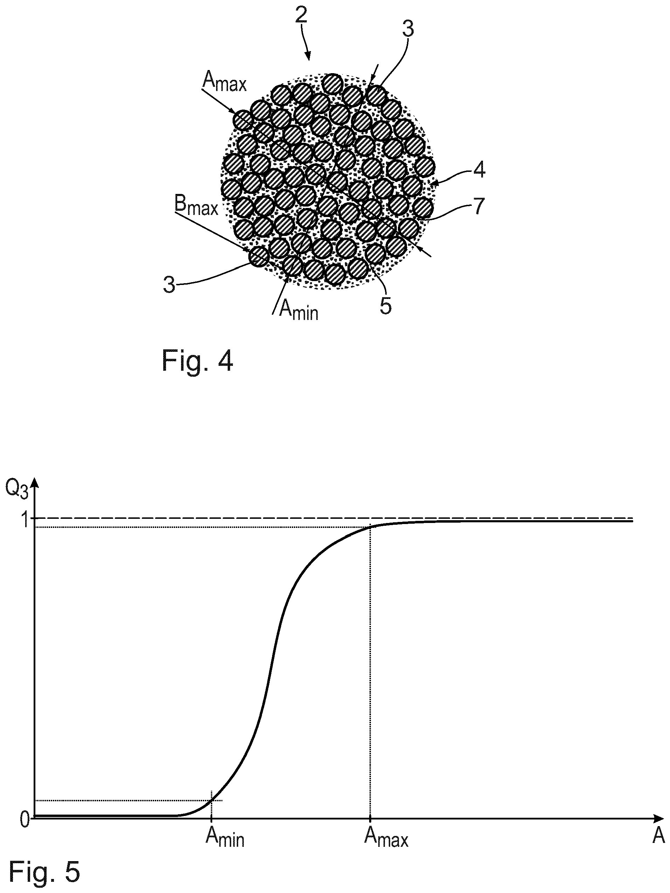

Ferner weisen die Formmassenteilchen 2 jeweils eine minimale Abmessung Aₘᵢₙ und eine maximale Abmessung Aₘₐₓ auf. Für mindestens 80 %, insbesondere für mindestens 90 %, und insbesondere für mindestens 95 % einer volumenbezogenen, kumulativen Verteilung Q₃ der Formmassenteilchen 2 gilt: 0,005 mm ≤ Aₘₐₓ ≤ 0,3 mm, insbesondere 0,008 mm ≤ Aₘₐₓ ≤ 0,2 mm, und insbesondere 0,01 mm ≤ Aₘₐₓ ≤ 0,1 mm. Die volumenbezogene, kumulative Verteilung Q₃ der Formmassenteilchen 2 in Abhängigkeit einer Abmessung A ist beispielhaft in Fig. 5 veranschaulicht. Ferner sind die Formmassenteilchen 2 im Wesentlichen kugelförmig ausgebildet, so dass für mindestens 80 %, insbesondere für mindestens 90 %, und insbesondere für mindestens 95 % einer volumenbezogenen, kumulativen Verteilung der Formmassenteilchen 2 gilt: 0,6 ≤ Aₘᵢₙ/Aₘₐₓ ≤ 1, insbesondere 0,7 ≤ Aₘᵢₙ/Aₘₐₓ ≤ 1, und insbesondere 0,8 ≤ Aₘᵢₙ/Aₘₐₓ ≤ 1.

Die Substratteilchen 3 haben in den Formmassenteilchen 2 jeweils einen Anteil von 40 Vol.-% bis 70 Vol.-%, insbesondere von 45 Vol.-% bis 65 Vol.-%, und insbesondere von 50 Vol.-% bis 60 Vol.-%. Die Substratteilchen 3 weisen jeweils eine maximale Abmessung Bₘₐₓ auf, wobei für mindestens 80 %, insbesondere für mindestens 90 %, und insbesondere für mindestens 95 % einer volumenbezogenen, kumulativen Verteilung der Substratteilchen 3 gilt: 1 µm ≤ Bₘₐₓ ≤ 50 µm, insbesondere 5 µm ≤ Bₘₐₓ ≤ 40 µm, und insbesondere 10 µm ≤ Bₘₐₓ ≤ 30 µm.

Die Substratteilchen 3 werden durch den zweiphasigen Binder 4 zusammengehalten und bilden so die pulverförmigen Formmassenteilchen 2. Der Binder 4 weist eine Schmelzeviskosität von 10⁰ Pa·s bis 10⁶ Pa·s, insbesondere von 10⁰ Pa·s bis 10⁵ Pa·s, und insbesondere von 10⁰ Pa·s bis 10⁴ Pa·s bei einer Temperatur auf, die mindestens 10°C über einer Temperatur T_{S} liegt, wobei die Temperatur T_{S} bei einer amorphen Struktur des Binders 4 die Glasübergangstemperatur und bei einem teilkristallinen Binder 4 die Kristallitschmelztemperatur des Binders 4 ist. Die Bestimmung der Schmelzeviskosität erfolgt nach DIN EN ISO 3219 (Stand: Oktober 1994) und insbesondere bei einem Geschwindigkeitsgefälle, das ausgewählt ist aus der Gruppe 1,00 s⁻¹, 2,50 s⁻¹, 5,00 s⁻¹, 10,0 s⁻¹, 25,0 s⁻¹, 50,0 s⁻¹ und 100 s⁻¹. Die angegebenen Werte der Schmelzeviskosität gelten insbesondere für ein Geschwindigkeitsgefälle von 1,00 s⁻¹. In dem zweiphasigen Binder 4 hat das thermoplastische Polymer 7 einen Anteil von 10 Gew.-% bis 70 Gew.-%, insbesondere von 15 Gew.-% bis 50 Gew.-%, und insbesondere von 20 Gew.-% bis 40 Gew.-% und der Weichmacher 5 einen Anteil von 30 Gew.-% bis 90 Gew.-%, insbesondere von 50 Gew.-% bis 85 Gew.-%, und insbesondere von 60 Gew.-% bis 80 Gew.-%. Der Binder 4 kann gegebenenfalls zusätzliche Additive enthalten.

Das thermoplastische Polymer 7 ist ausgewählt aus der Gruppe Polykondensate, Polymerisate, Polyaddukte und thermoplastische Elastomere. Der Weichmacher 5 ist ein Ester einer aromatischen Hydroxybenzoesäure, vorzugsweise ein p-Hydroxybenzoesäure-Fettalkoholester, wobei eine Länge der Kohlenstoffkette vorzugsweise im Bereich C12-C26, insbesondere im Bereich C18-C22 liegt. Der Weichmacher 5 dient zur Einstellung der Schmelzeviskosität bzw. der rheologischen Eigenschaften des Binders 4.

Die Formmassenteilchen 2 werden beispielsweise derart hergestellt, dass eine Suspension aus den Substratteilchen 3 und einem alkoholischen Medium, in dem der Binder 4 gelöst ist, einer Sprühtrocknung unterzogen wird.

Die Formmassenteilchen 2 werden mittels einer Vorrichtung 8 zur additiven Herstellung eines Formteils 9 bereitgestellt. Hierzu weist die Vorrichtung 8 einen Grundkörper 10 auf, der eine in einer horizontalen x-Richtung und in einer horizontalen y-Richtung verlaufende ebene Oberfläche 11 aufweist. In dem Grundkörper 10 ist eine Vorratsausnehmung 12 ausgebildet, die zusammen mit einem in einer vertikalen z-Richtung verlagerbaren Boden 13 einen Vorratsraum 14 für die Formmassenteilchen 2 bildet. Der Vorratsraum 14 ist zu der Oberfläche 11 hin offen. Die Formmassenteilchen 2 werden in dem Vorratsraum 14 bereitgestellt. Die pulverförmigen Formmassenteilchen 2 werden auch als Feedstockpulver bezeichnet. Die x-, y- und z-Richtung bilden ein kartesisches Koordinatensystem.

In der x-Richtung benachbart zu der Vorratsausnehmung 12 ist in dem Grundkörper 10 eine Bauausnehmung 15 ausgebildet. Die Bauausnehmung 15 erstreckt sich in der x- und der y-Richtung und definiert ein Baufeld. In der Bauausnehmung 15 ist ein in der z-Richtung verlagerbarer Baugrundkörper 16 angeordnet. Der Baugrundkörper 16 ist vorzugsweise als Bauplattform ausgebildet. Die Bauausnehmung 15 und der Baugrundkörper 16 begrenzen einen zur Oberfläche 11 hin offenen Bauraum 17.

In einem Verfahrensschritt S₂ wird eine erste Schicht Li aus Formmassenteilchen 2 mittels einer Auftragseinrichtung 18 auf den Baugrundkörper 16 aufgebracht. Die Auftragseinrichtung 18 ist in z-Richtung oberhalb der Oberfläche 11 angeordnet und befördert bereitgestellte Formmassenteilchen 2 in den Bauraum 17. Hierzu weist die Auftragseinrichtung 18 beispielsweise eine Rakel 19 auf, die sich in der y-Richtung erstreckt und in der x-Richtung entlang der Oberfläche 11 verlagerbar ist. Zum Aufbringen der ersten Schicht Li wird zunächst der Boden 13 in der z-Richtung verlagert, so dass sich eine gewünschte Menge der Formmassenteilchen 2 oberhalb der Oberfläche 11 befindet. Anschließend wird die Rakel 19 in der x-Richtung verlagert, so dass die Rakel 19 die oberhalb der Oberfläche 11 befindlichen Formmassenteilchen 2 mitnimmt und in den Bauraum 17 befördert und dort gleichmäßig verteilt. Das Verlagern des Bodens 13, der Rakel 19 und des Baugrundkörpers 16 wird mittels einer Steuereinrichtung 20 gesteuert. Die erste Schicht Li wird mit einer Dicke D aufgebracht, die sich aus dem Abstand des Baugrundkörpers 16 zu der Oberfläche 11 ergibt.

In einem Verfahrensschritt S₃ wird der Binder 4 der Formmassenteilchen 2 in der ersten Schicht L₁ selektiv aufgeschmolzen, so dass eine erste Formteilschicht Fi entsteht. Die erste Schicht Li ist in diesem Verfahrensschritt der Oberfläche 11 nächstliegend und bildet einen Baubereich aus. Der Baubereich wird mittels Heizelementen 23 auf eine Temperatur T_{B} beheizt. Für die Temperatur T_{B} im Baubereich gilt: 20°C ≤ T_{B} ≤ T_{S}, insbesondere 20°C ≤ T_{B} ≤ 120°C, insbesondere 25°C ≤ T_{B} ≤ 100°C, und insbesondere 30°C ≤ T_{B} ≤ 80°C. Tₛ ist bei einer amorphen Struktur des Binders 4 die Glasübergangstemperatur oder bei einer teilkristallinen bzw. kristallinen Struktur des Binders 4 die höchste Kristallitschmelztemperatur des Binders 4. Das selektive Aufschmelzen erfolgt mittels einer elektromagnetischen Strahlung R, insbesondere mittels einer Laserstrahlung. Die elektromagnetische Strahlung R wird mittels einer elektromagnetischen Strahlungsquelle 21 erzeugt und über eine Spiegeleinrichtung 22 auf das Baufeld gelenkt. Die Spiegeleinrichtung 22 ermöglicht ein Verlagern der auf das Baufeld treffenden elektromagnetischen Strahlung R in der x- und der y-Richtung. Zur Herstellung der ersten Formteilschicht Fi wird die elektromagnetische Strahlung R entsprechend dem herzustellenden Formteil 9 in der x- und/oder der y-Richtung verlagert. Mittels der elektromagnetischen Strahlung R wird der Binder 4 aufgeschmolzen, so dass der Binder 4 zwischen den Substratteilchen 3 verläuft und beim Erstarren die feste erste Formteilschicht Fi ausbildet.

In einem Verfahrensschritt S₄ wird in der beschriebenen Weise eine weitere Schicht L₂ aus Formmassenteilchen 2 auf die zuvor aufgebrachte Schicht Li aufgebracht. Hierzu wird der Boden 13 in der z-Richtung verlagert, so dass sich eine gewünschte Menge von Formmassenteilchen 2 oberhalb der Oberfläche 11 befindet und mittels der Auftragseinrichtung 18 zu dem Bauraum 17 transportiert werden kann. Zum Aufbringen der Schicht L₂ wird der Baugrundkörper 16 um die Dicke D in der z-Richtung abgesenkt, so dass die Formmassenteilchen 2 auf der zuvor aufgebrachten Schicht Li gleichmäßig und homogen verteilt werden können.

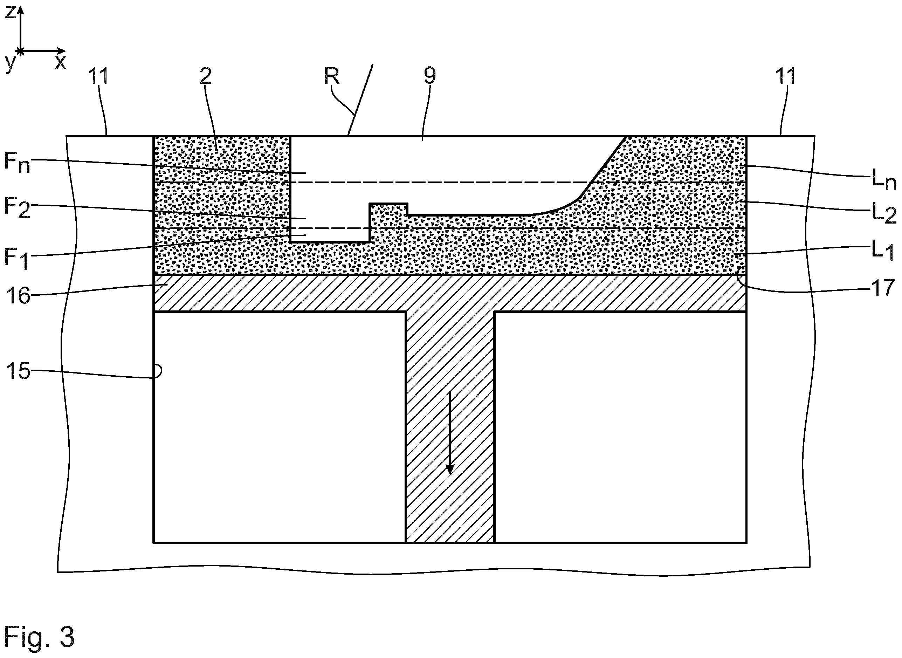

In einem Verfahrensschritt S₅ wird der Binder 4 der Formmassenteilchen 2 in der Schicht L₂ mittels der elektromagnetischen Strahlung R in der beschriebenen Weise selektiv aufgeschmolzen, so dass eine weitere Formteilschicht F₂ hergestellt wird. Der aufgeschmolzene Binder 4 verläuft zwischen den Substratteilchen 3 und hält diese nach dem Erstarren des Binders 4 zusammen. Für die Dicke D der aufgebrachten Schichten L₁, L₂ gilt: 0,05 mm ≤ D ≤ 0,3 mm, insbesondere 0,07 mm ≤ D ≤ 0,25 mm, und insbesondere 0,09 mm ≤ D ≤ 0,2 mm. Die Verfahrensschritte S₄ und S₅ werden solange wiederholt, bis das Formteil 9 in der gewünschten Weise additiv hergestellt ist. In Fig. 3 sind beispielsweise drei Schichten L₁, L₂ und Lₙ und drei Formteilschichten F₁, F₂ und Fₙ mit n = 3 dargestellt. Alternativ können zunächst eine Schicht oder mehrere Schichten aus Formmassenteilchen 2 aufgebracht werden, bevor der Binder 4 mittels der elektromagnetischen Strahlung R aufgeschmolzen und eine feste erste Formteilschicht F₁ ausgebildet wird. Das Formteil 9 ist in diesem Fall auf mindestens einer nicht aufgeschmolzenen Schicht angeordnet.

In einem Verfahrensschritt S₆ wird das Formteil 9 aus den nicht aufgeschmolzenen Formmassenteilchen 2 aus dem Bauraum 17 entnommen und gereinigt. Das Formteil 9 wird auch als Grünteil bezeichnet.

In einem Verfahrensschritt S₇ wird das Formteil 9 chemisch entbindert.

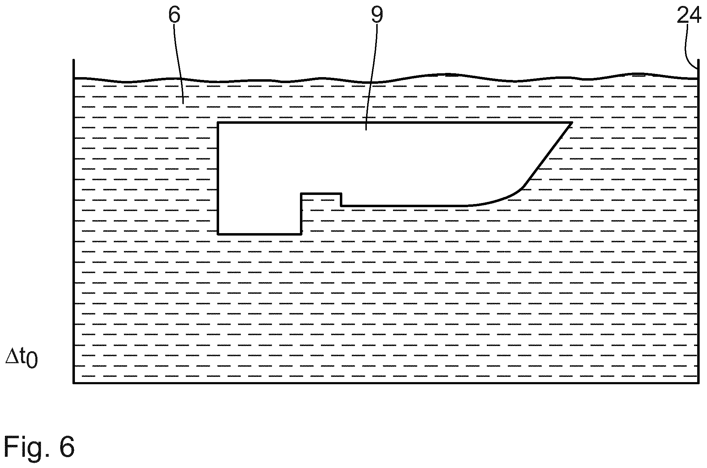

Hierzu wird das Formteil 9 in einen mit dem Lösungsmittel 6 gefüllten Behälter 24 eingetaucht. Dies ist in Fig. 6 veranschaulicht. Als Lösungsmittel 6 dient beispielsweise Aceton. Das Lösungsmittel 6 löst den Weichmacher 5 aus dem Formteil 9, wohingegen das thermoplastische Polymer 7 unlöslich ist und in dem Formteil 9 verbleibt. Aufgrund des Entfernens des Weichmachers 5 erhält das Formteil 9 eine mikroporöse Struktur. Das Lösungsmittel 6 hat eine Temperatur T_{L}. Für die Temperatur T_{L} gilt: 20°C ≤ T_{L} ≤ 100°C, insbesondere 25°C ≤ T_{L} ≤ 80°C, und insbesondere 30°C ≤ T_{L} ≤ 60°C. Mittels des Lösungsmittels 6 werden zwischen 30 % und 100 %, insbesondere zwischen 50 % und 90 %, und insbesondere zwischen 60 % und 80 % des Weichmachers 5 aus dem Formteil 9 entfernt. Das Formteil 9 wird nach der chemischen Entbinderung auch als Braunteil bezeichnet. Nach einer Zeitdauer Δt₀ wird die chemische Entbinderung beendet und das Formteil 9 aus dem Lösungsmittel 6 entnommen. Die Zeitdauer Δt₀ ist von der Bauteilgeometrie und insbesondere quadratisch von der Wandstärke des Formteils 9 abhängig.

In einem Verfahrensschritt S₈ wird das Formteil 9 nach der chemischen Entbinderung thermisch entbindert und anschließend in einem Verfahrensschritt S₉ gesintert. Die thermische Entbinderung und das Sintern erfolgt mittels einer Heizeinrichtung unter Inertgas-Atmosphäre oder in einer reduzierenden Atmosphäre oder im Hochvakuum. Zur thermischen Entbinderung wird das Formteil 9 auf eine erste Temperatur T₁ gebracht. Für die erste Temperatur T₁ gilt: 300°C ≤ T₁ ≤ 900°C, insbesondere 400°C ≤ T₁ ≤ 800°C, und insbesondere 550°C ≤ T₁ ≤ 750°C. Bei der thermischen Entbinderung wird der Binder 4, also das thermoplastische Polymer 7 und gegebenenfalls restlicher Weichmacher 5, bei der ersten Temperatur T₁ aus dem Formteil 9 herausgebrannt und der Binder 4 somit thermisch entfernt. Hierbei bilden die Substratteilchen 3 teilweise Sinterhälse aus, so dass das Formteil 9 trotz des Entfernens des thermoplastischen Polymers 7 zusammengehalten wird. Aufgrund der mikroporösen Struktur des Formteils 9 erfolgt die thermische Entbinderung schnell und gleichmäßig. Das thermische Entfernen des Binders 4 erfolgt während einer Zeitdauer Δt₁. Die Zeitdauer Δt₁ ist von der Bauteilgeometrie und insbesondere quadratisch von der Wandstärke des herzustellenden Bauteils 1 abhängig. Die Zeitdauer Δt₁ wird vorzugsweise so gewählt, dass mindestens 95 %, insbesondere mindestens 99 %, und insbesondere mindestens 99,9 % des Binders 4 entfernt werden.

Anschließend wird das Formteil 9 in dem Verfahrensschritt S₉ auf eine zweite Temperatur T₂ gebracht, die im Vergleich zu der ersten Temperatur T₁ höher ist. Bei der Temperatur T₂ erfolgt das Sintern des Formteils 9. Für die zweite Temperatur T₂ gilt: 600°C ≤ T₂ ≤ 2400°C, insbesondere 800°C ≤ T₂ ≤ 2200°C, und insbesondere 1100°C ≤ T₂ ≤ 2000°C. Das Sintern erfolgt während einer Zeitdauer Δt₂. Die Zeitdauer Δt₂ ist von der Bauteilgeometrie und insbesondere quadratisch von der Wandstärke des herzustellenden Bauteils 1 abhängig. Die Zeitdauer Δt₂ ist vorzugsweise so lange, dass durch anschließendes weiteres Sintern keine relevante Änderung einer Porosität des Bauteils 1 erzielbar ist. Vorzugsweise erfolgt das Sintern so lange, bis für die Porosität P gilt: 0,01 ≤ P ≤ 0,15, insbesondere 0,03 ≤ P ≤ 0,12, insbesondere 0,05 ≤ P ≤ 0,09.

Nach dem Sintern sind mindestens 90 %, insbesondere mindestens 95 %, und insbesondere mindestens 99,9 % des Binders 4 aus dem Formteil 9 entfernt. Nach dem Sintern liegt das additiv hergestellte Bauteil 1 vor.

Das Bauteil 1 ist je nach der Verwendung von metallischen und/oder glasartigen und/oder keramischen Substratteilchen 3 aus Metall und/oder Glas und/oder Keramik ausgebildet. In einem Bauteil-Inneren 25 weist das Bauteil 1 geschlossene Poren 26 auf. An einer Bauteil-Oberfläche 27 weist das Bauteil 1 offene Poren 28 auf. Das Bauteil 1 hat eine mikroporöse Struktur, so dass mindestens 80 %, insbesondere mindestens 85 %, und insbesondere 90 % der Poren 26, 28 eine maximale Abmessung dₘₐₓ zwischen 1 µm und 100 µm, insbesondere zwischen 10 µm und 80 µm, und insbesondere zwischen 20 µm und 60 µm , haben. Das Bauteil 1 weist eine Porosität P auf, die als Quotient eines Porenvolumens zu einem Bauteilvolumen definiert ist. Das Bauteilvolumen umfasst das Materialvolumen und die Volumina der geschlossenen Poren 26. Für die Porosität P gilt: 0,01 ≤ P ≤ 0,15, insbesondere 0,03 ≤ P ≤ 0,12, insbesondere 0,05 ≤ P ≤ 0,09.

Die offenen Poren 28 an der Bauteil-Oberfläche 27 bilden aufgrund ihrer Form zumindest teilweise Hinterschnitte 29 aus. Beispielsweise sind die offenen Poren 28 ausgehend von der Bauteil-Oberfläche 27 tropfenförmig ausgebildet, so dass sich diese in Richtung des Bauteil-Inneren 25 erweitern und die Hinterschnitte 29 ausbilden. Aufgrund der offenen Poren 28 weist die Bauteil-Oberfläche 27 eine Oberflächenrauheit rz auf. Für die Oberflächenrauheit rz gilt: 5 µm ≤ r_{Z} ≤ 200 µm, insbesondere 10 µm ≤ r_{Z} ≤ 120 µm, und insbesondere 15 µm ≤ r_{Z} ≤ 100 µm. Die Oberflächenrauheit rz ist definiert nach DIN EN ISO 4287 (Stand: Oktober 1998) und gemessen über das Tastschnittverfahren nach DIN EN ISO 4288 (Stand: April 1998).

## Patentansprüche

1. Verfahren zur additiven Herstellung eines Bauteils mit den Schritten:
- Bereitstellen von Substratteilchen (3) und einem Binder (4),
-- wobei die Substratteilchen (3) ausgewählt sind aus der Gruppe metallische Substratteilchen (3), glasartige Substratteilchen (3) und keramische Substratteilchen (3), und
-- wobei der Binder (4) umfasst:
--- ein thermoplastisches Polymer (7), und
--- mindestens ein Additiv (5) zur Beeinflussung der rheologischen Eigenschaften des Binders (4),
--- wobei das mindestens eine Additiv (5) einen Anteil in dem Binder (4) von 30 % bis 90 % hat,
-- wobei die Substratteilchen (3) und der Binder (4) pulverförmige Formmassenteilchen (2) ausbilden, wobei die Formmassenteilchen (2) jeweils eine Mehrzahl von Substratteilchen (3) umfassen,
- Erzeugen eines Formteils (9) derart, dass
-- eine Schicht (L₁ bis Lₙ) aus Substratteilchen (3) und Binder (4) erzeugt wird und zur Herstellung einer Formteilschicht (F₁ bis Fₙ) der Binder (4) selektiv mittels einer elektromagnetischen Strahlung (R) aufgeschmolzen wird, und
-- mindestens eine weitere Schicht (L₁ bis Lₙ) aus Substratteilchen (3) und Binder (4) erzeugt wird und zur Herstellung mindestens einer weiteren Formteilschicht (F₁ bis Fₙ) der Binder (4) selektiv mittels der elektromagnetischen Strahlung (R) aufgeschmolzen wird,
- Entnehmen des Formteils (9) aus den erzeugten Schichten (L₁ bis Lₙ),
- Entfernen des Binders (4) aus dem Formteil (9), wobei der Binder (4) sukzessive aus dem Formteil (9) entfernt wird, und
- Sintern des Formteils (9) zu dem Bauteil (1).

2. Verfahren nach Anspruch 1,
wobei die Formmassenteilchen (2) jeweils eine maximale Abmessung Aₘₐₓ haben und für mindestens 80 % der Formmassenteilchen (2) gilt: 0,005 mm ≤ Aₘₐₓ ≤ 0,3 mm, insbesondere 0,008 mm ≤ Aₘₐₓ ≤ 0,2 mm, und insbesondere 0,01 mm ≤ Aₘₐₓ ≤ 0,1 mm.

3. Verfahren nach einem der Ansprüche 1 und 2,
wobei die Formmassenteilchen (2) jeweils eine minimale Abmessung Aₘᵢₙ und eine maximale Abmessung Aₘₐₓ haben und für mindestens 80 % der Formmassenteilchen (2) gilt: 0,6 ≤ Aₘᵢₙ/Aₘₐₓ ≤ 1, insbesondere 0,7 ≤ Aₘᵢₙ/Aₘₐₓ ≤ 1, und insbesondere 0,8 ≤ Aₘᵢₙ/Aₘₐₓ ≤ 1.

4. Verfahren nach einem der Ansprüche 1 bis 3,
wobei die Substratteilchen (3) einen Anteil in den Formmassenteilchen (2) von 40 Vol.-% bis 70 Vol.-%, insbesondere von 45 Vol.-% bis 65 Vol.-%, und insbesondere von 50 Vol.-% bis 60 Vol.-% haben.

5. Verfahren nach einem der Ansprüche 1 bis 4,
wobei der Binder (4) eine nach DIN EN ISO 3219 gemessene Schmelzeviskosität von 10⁰ Pa·s bis 10⁶ Pa·s, insbesondere von 10⁰ Pa·s bis 10⁵ Pa·s, und insbesondere von 10⁰ Pa·s bis 10⁴ Pa·s bei einer Temperatur hat, die mindestens 10°C über einer Temperatur T_{S} liegt, wobei die Temperatur T_{S} eine Glasübergangstemperatur oder eine Kristallitschmelztemperatur des Binders (4) ist und ein Geschwindigkeitsgefälle insbesondere ausgewählt ist aus der Gruppe 1,00 s⁻¹, 2,50 s⁻¹, 5,00 s⁻¹, 10,0 s⁻¹, 25,0 s⁻¹, 50,0 s⁻¹ und 100 s⁻¹.

6. Verfahren nach einem der Ansprüche 1 bis 5,
wobei das thermoplastische Polymer (7) einen Anteil in dem Binder (4) von 10 % bis 70 %, insbesondere von 15 % bis 50 %, und insbesondere von 20 % bis 40 % hat.

7. Verfahren nach einem der Ansprüche 1 bis 6,
wobei das mindestens eine Additiv (5) einen Anteil in dem Binder (4) von 50% bis 85 %, und insbesondere von 60 % bis 80 % hat.

8. Verfahren nach einem der Ansprüche 1 bis 7,
wobei die Substratteilchen (3) jeweils eine maximale Abmessung Bₘₐₓ haben und für mindestens 80 % der Substratteilchen (3) gilt: 1 µm ≤ Bₘₐₓ ≤ 50 µm, insbesondere 5 µm ≤ Bₘₐₓ ≤ 40 µm, und insbesondere 10 µm ≤ Bₘₐₓ ≤ 30 µm.

9. Verfahren nach einem der Ansprüche 1 bis 8,
wobei das thermoplastische Polymer (7) ausgewählt ist aus der Gruppe Polykondensate, Polymerisate, Polyaddukte und thermoplastische Elastomere.

10. Verfahren nach einem der Ansprüche 1 bis 9,
wobei das mindestens eine Additiv (5) einen Weichmacher umfasst, insbesondere einen Ester einer aromatischen Hydroxybenzoesäure.

11. Verfahren nach einem der Ansprüche 1 bis 10,
wobei die Substratteilchen (3) und der Binder (4) zur Ausbildung einer Schicht (L₁ bis Lₙ) in einem Baubereich verteilt werden, wobei für eine Temperatur T_{B} im Baubereich gilt: 20°C ≤ T_{B} ≤ T_{S}, insbesondere 20°C ≤ T_{B} ≤ 120°C, insbesondere 25°C ≤ T_{B} ≤ 100°C, und insbesondere 30°C ≤ T_{B} ≤ 80°C, wobei T_{S} eine Glasübergangstemperatur oder eine Kristallitschmelztemperatur des Binders (4) ist.

12. Verfahren nach einem der Ansprüche 1 bis 11,
wobei das mindestens eine Additiv (5) zumindest teilweise vor dem thermoplastischen Polymer (7) aus dem Formteil (9) entfernt wird.

13. Verfahren nach einem der Ansprüche 1 bis 12,
wobei das mindestens eine Additiv (5) mittels eines Lösungsmittels (6) löslich ist und das thermoplastische Polymer (7) mittels des Lösungsmittels (6) unlöslich ist und das mindestens eine Additiv (5) zumindest teilweise mittels des Lösungsmittels (6) aus dem Formteil (9) entfernt wird.

14. Verfahren nach einem der Ansprüche 1 bis 13,
wobei das Formteil (9) zum Entfernen des mindestens einen Additivs (5) in ein Lösungsmittel (6) eingetaucht wird, wobei für eine Temperatur T_{L} des Lösungsmittels (6) gilt: 20°C ≤ T_{L} ≤ 100°C, insbesondere 25°C ≤ T_{L} ≤ 80°C, und insbesondere 30°C ≤ T_{L} ≤ 60°C.

15. Verfahren nach einem der Ansprüche 1 bis 14,
wobei mittels eines Lösungsmittels (6) zwischen 30 % und 100 %, insbesondere zwischen 50 % und 90 %, und insbesondere zwischen 60 % und 80%, des mindestens einen Additivs (5) aus dem Formteil (9) entfernt werden.

16. Verfahren nach einem der Ansprüche 1 bis 15,
wobei der Binder (4) zumindest teilweise thermisch bei einer ersten Temperatur T₁ aus dem Formteil (9) entfernt wird, wobei für die erste Temperatur T₁ gilt: 300°C ≤ T₁ ≤ 900°C, insbesondere 400°C ≤ T₁ ≤ 800°C, und insbesondere 550°C ≤ T₁ ≤ 750°C, und/oder ein thermisches Entfernen des Binders (4) in einer Inertgas-Atmosphäre oder in einer reduzierenden Atmosphäre oder in einem Hochvakuum erfolgt.

## Claims

1. A method for the additive manufacture of a component, comprising the steps:
- providing substrate particles (3) and a binder (4),
-- wherein the substrate particles (3) are selected from the group consisting of metallic substrate particles (3), vitreous substrate particles (3) and ceramic substrate particles (3), and
-- wherein the binder (4) comprises:
--- a thermoplastic polymer (7), and
--- at least one additive (5) for influencing the rheological properties of the binder (4),
--- wherein the at least one additive (5) is present in a proportion of 30% to 90% in the binder (4),
-- wherein the substrate particles (3) and the binder (4) form powdery composite particles (2), wherein the composite particles (2) each comprise a plurality of substrate particles (3),
- producing a shaped part (9) in such a manner that
-- a layer (L₁ to Lₙ) of substrate particles (3) and binder (4) is produced and the binder (4) is selectively melted by means of electromagnetic radiation (R) to produce a shaped part layer (F₁ to Fₙ), and
-- at least one further layer (L₁ to Lₙ) of substrate particles (3) and binder (4) is produced and the binder (4) is selectively melted by means of the electromagnetic radiation (R) to produce at least one further shaped part layer (F₁ to Fₙ),
- taking the shaped part (9) out from the layers (L₁ to Lₙ) produced,
- removing the binder (4) from the shaped part (9), wherein the binder (4) is removed successively from the shaped part (9), and
- sintering the shaped part (9) to obtain the component (1).

2. A method according to claim 1,
wherein the composite particles (2) in each case have a maximum dimension Aₘₐₓ and the following applies to at least 80% of the composite particles (2): 0.005 mm ≤ Aₘₐₓ ≤ 0.3 mm, in particular 0.008 mm ≤ Aₘₐₓ ≤ 0.2 mm, and in particular 0.01 mm ≤ Aₘₐₓ ≤ 0.1 mm.

3. A method according to one of claims 1 and 2,
wherein the composite particles (2) each have a minimum dimension Aₘᵢₙ and a maximum dimension Aₘₐₓ and the following applies to at least 80% of the composite particles (2): 0.6 ≤ Aₘᵢₙ /Aₘₐₓ ≤ 1, in particular 0.7 ≤ Aₘᵢₙ /Aₘₐₓ ≤ 1, and in particular 0.8 ≤ Aₘᵢₙ /A ≤ 1.ₘₐₓ

4. A method according to any one of claims 1 to 3,
wherein the substrate particles (3) are present in a proportion of from 40% by volume to 70% by volume, in particular from 45% by volume to 65% by volume, and in particular from 50% by volume to 60% by volume, in the composite particles (2).

5. A method according to any one of claims 1 to 4,
wherein the binder (4) has a melt viscosity, measured according to DIN EN ISO 3219 of from 10⁰ Pa·s to 10⁶ Pa·s, in particular from 10⁰ Pa·s to 10⁵ Pa·s, and in particular from 10⁰ Pa·s to 10⁴ Pa·s, at a temperature which is at least 10°C above a temperature T_{S}, wherein the temperature T_{S} is a glass transition temperature or a crystallite melting temperature of the binder (4), and a shear rate is, in particular, selected from the group 1.00 s⁻¹ , 2.50 s⁻¹ , 5.00 s⁻¹ , 10.0 s⁻¹ , 25.0 s⁻¹ , 50.0 s⁻¹ and 100 s⁻¹

6. A method according to any one of claims 1 to 5,
wherein the thermoplastic polymer (7) is present in a proportion of from 10% to 70%, in particular from 15% to 50%, and in particular from 20% to 40%, in the binder (4).

7. A method according to any one of claims 1 to 6,
wherein the at least one additive (5) is present in a proportion of from 50% to 85%, and in particular from 60% to 80%, in the binder (4).

8. A method according to any one of claims 1 to 7,
wherein the substrate particles (3) in each case have a maximum dimension Bₘₐₓ and the following applies to at least 80% of the substrate particles (3): 1 µm ≤ Bₘₐₓ ≤ 50 µm, in particular 5 µm ≤ Bₘₐₓ ≤ 40 µm, and in particular 10 µm ≤ Bₘₐₓ ≤ 30 µm.

9. A method according to any one of claims 1 to 8,
wherein the thermoplastic polymer (7) is selected from the group consisting of polycondensates, polymerizates, polyadducts and thermoplastic elastomers.

10. A method according to any one of claims 1 to 9,
wherein the at least one additive (5) comprises a plasticizer, in particular an ester of an aromatic hydroxybenzoic acid.

11. A method according to any one of claims 1 to 10,
wherein the substrate particles (3) and the binder (4) are distributed in a construction region to form a layer (L₁ to Lₙ), wherein the following applies for a temperature T_{B} in the construction region: 20°C ≤ T_{B} ≤ Ts, in particular 20°C ≤ T_{B} ≤ 120°C, in particular 25°C ≤ T_{B} ≤ 100°C, and in particular 30°C ≤ T_{B} ≤ 80°C, wherein T_{S} is a glass transition temperature or a crystallite melting temperature of the binder (4).

12. A method according to any one of claims 1 to 11,
wherein the at least one additive (5) is at least partially removed from the shaped part (9) before the thermoplastic polymer (7).

13. A method according to any one of claims 1 to 12,
wherein the at least one additive (5) can be dissolved by means of a solvent (6) and the thermoplastic polymer (7) is insoluble by means of the solvent (6) and the at least one additive (5) is at least partially removed from the shaped part (9) by means of the solvent (6).

14. A method according to any one of claims 1 to 13,
wherein the shaped part (9) is dipped into a solvent (6) in order to remove the at least one additive (5), wherein the following applies for a temperature T_{L} of the solvent (6): 20°C ≤ T_{L} ≤ 100°C, in particular 25°C ≤ T_{L} ≤ 80°C, and in particular 30°C ≤ T_{L} ≤ 60°C.

15. A method according to any one of claims 1 to 14,
wherein between 30% and 100%, in particular between 50% and 90%, and in particular between 60% and 80%, of the at least one additive (5) is removed from the shaped part (9) by means of a solvent (6).

16. A method according to any one of claims 1 to 15,
wherein the binder (4) is at least partially thermally removed from the shaped part (9) at a first temperature T₁, wherein the following applies for the first temperature T₁: 300°C ≤ T₁ ≤ 900°C, in particular 400°C ≤ T₁ ≤ 800°C, and in particular 550°C ≤ T₁ ≤ 750°C, and/or a thermal removal of the binder (4) takes place in an inert gas atmosphere or in a reducing atmosphere or in a high vacuum.

## Revendications

1. Procédé de fabrication additive d'un composant, comportant les étapes :
- de mise à disposition de particules de substrat (3) et d'un liant (4),
-- les particules de substrat (3) étant choisies dans le groupe des particules de substrat métalliques (3), des particules de substrat de type verre (3) et des particules de substrat céramique (3), et
-- le liant (4) comprenant :
--- un polymère thermoplastique (7), et
--- au moins un additif (5) pour influencer les propriétés rhéologiques du liant (4),
--- ledit au moins un additif (5) présentant une proportion de liant (4) allant de 30 % à 90 %,
-- les particules de substrat (3) et le liant (4) formant des particules de matière à mouler en poudre (2), les particules de matière à mouler (2) comprenant chacune une pluralité de particules de substrat (3),
- de génération d'une pièce moulée (9) de manière
-- à générer une couche (L₁ à Lₙ) de particules de substrat (3) et de liant (4) et à fondre sélectivement le liant (4) au moyen d'un rayonnement électromagnétique (R) pour fabriquer une couche de pièce moulée (F₁ à Fₙ), et
-- à générer au moins une autre couche (L₁ à Lₙ) à partir de particules de substrat (3) et de liant (4), et à fondre sélectivement le liant (4) au moyen du rayonnement électromagnétique (R) pour fabriquer au moins une autre couche de pièce moulée (F₁ à Fₙ),
- de retrait de la pièce moulée (9) des couches générées (L₁ à Lₙ),
- d'élimination du liant (4) de la pièce moulée (9), le liant (4) étant successivement enlevé de la pièce moulée (9), et
- de frittage de la pièce moulée (9) pour obtenir la pièce (1).

2. Procédé selon la revendication 1,
dans lequel les particules de matière à mouler (2) présentent chacune une dimension maximale Aₘₐₓ et, pour au moins 80 % des particules de masse à mouler (2), on a : 0,005 mm ≤ Aₘₐₓ ≤ 0,3 mm, en particulier 0,008 mm ≤ Aₘₐₓ ≤ 0,2 mm, et en particulier 0,01 mm ≤ Aₘₐₓ ≤ 0,1 mm.

3. Procédé selon l'une des revendications 1 et 2,
dans lequel les particules de masse à mouler (2) ayant chacune une dimension minimale Aₘᵢₙ et une dimension maximale Aₘₐₓ et pour au moins 80 % des particules de masse à mouler (2), on a : 0,6 ≤ Aₘᵢₙ /Aₘₐₓ ≤ 1, en particulier 0,7 ≤ Aₘᵢₙ /Aₘₐₓ ≤ 1, et en particulier 0,8 ≤ Aₘᵢₙ /Aₘₐₓ ≤ 1.

4. Procédé selon l'une des revendications 1 à 3,
dans lequel les particules de substrat (3) présentent une proportion de particules de matière à mouler (2) allant de 40 % en volume à 70 % en volume, en particulier de 45 % en volume à 65 % en volume, et en particulier de 50 % en volume à 60 % en volume.

5. Procédé selon l'une des revendications 1 à 4,
dans lequel le liant (4) présente une viscosité à l'état fondu, mesurée selon la norme DIN EN ISO 3219, allant de 10⁰ Pa·s à 10⁶ Pa·s, en particulier de 10⁰ Pa·s à 10⁵ Pa·s, et en particulier de 10⁰ Pa·s à 10⁴ Pa·s à une température qui est supérieure d'au moins 10°C à une température T_{S}, la température T_{S} étant une température de transition vitreuse ou une température de fusion des cristallites du liant (4) et un gradient de vitesse étant notamment choisi dans le groupe 1,00 s⁻¹ , 2,50 s⁻¹ , 5,00 s⁻¹ , 10,0 s⁻¹ , 25,0 s⁻¹ , 50,0 s⁻¹ et 100 s⁻¹ .

6. Procédé selon l'une des revendications 1 à 5,
dans lequel le polymère thermoplastique (7) présente une proportion de liant (4) allant de 10 % à 70 %, en particulier de 15 % à 50 %, et en particulier de 20 % à 40 %.

7. Procédé selon l'une des revendications 1 à 6,
dans lequel l'au moins un additif (5) présente une proportion de liant (4) allant de 50 % à 85 %, et en particulier de 60 % à 80 %.

8. Procédé selon l'une des revendications 1 à 7,
dans lequel les particules de substrat (3) présentent chacune une dimension maximale Bₘₐₓ et pour au moins 80 % des particules de substrat (3), on a : 1 µm ≤ Bₘₐₓ ≤ 50 µm, en particulier 5 µm ≤ Bₘₐₓ ≤ 40 µm, et en particulier 10 µm ≤ Bₘₐₓ ≤ 30 µm.

9. Procédé selon l'une des revendications 1 à 8,
dans lequel le polymère thermoplastique (7) est choisi dans le groupe des polycondensats, des polymérisats, des polyadduits et des élastomères thermoplastiques.

10. Procédé selon l'une des revendications 1 à 9,
dans lequel l'au moins un additif (5) comprend un plastifiant, en particulier un ester d'un acide hydroxybenzoïque aromatique.

11. Procédé selon l'une des revendications 1 à 10,
dans lequel les particules de substrat (3) et le liant (4) sont répartis dans une zone de construction pour générer une couche (L₁ à Lₙ), où, pour une température T_{B} dans la zone de construction, on a : 20°C ≤ T_{B} ≤ Ts, en particulier 20°C ≤ T_{B} ≤ 120°C, en particulier 25°C ≤ T_{B} ≤ 100°C, et en particulier 30°C ≤ T_{B} ≤ 80°C, T_{S} étant une température de transition vitreuse ou une température de fusion des cristallites du liant (4).

12. Procédé selon l'une des revendications 1 à 11,
dans lequel ledit au moins un additif (5) est au moins partiellement éliminé de la pièce moulée (9) avant le polymère thermoplastique (7).

13. Procédé selon l'une des revendications 1 à 12,
dans lequel l'au moins un additif (5) est soluble au moyen d'un solvant (6) et le polymère thermoplastique (7) est insoluble au moyen du solvant (6) et l'au moins un additif (5) est au moins partiellement éliminé de la pièce moulée (9) au moyen du solvant (6).

14. Procédé selon l'une des revendications 1 à 13,
dans lequel la pièce moulée (9) est immergée dans un solvant (6) pour éliminer l'au moins un additif (5), où pour une température T_{L} du solvant (6) : 20°C ≤ T_{L} ≤ 100°C, en particulier 25°C ≤ T_{L} ≤ 80°C, et en particulier 30°C ≤ T_{L} ≤ 60°C.

15. Procédé selon l'une des revendications 1 à 14,
dans lequel, au moyen d'un solvant (6), une quantité comprise entre 30 % et 100 %, en particulier entre 50 % et 90 %, et en particulier entre 60 % et 80 %, de l'au moins un additif (5) est éliminée de la pièce moulée (9).

16. Procédé selon l'une des revendications 1 à 15,
dans lequel le liant (4) est au moins partiellement éliminé thermiquement de la pièce moulée (9) à une première température T₁, la première température T₁ étant telle que : 300°C ≤ T₁ ≤ 900°C, en particulier 400°C ≤ T₁ ≤ 800°C, et en particulier 550°C ≤ T₁ ≤ 750°C, et/ou une élimination thermique du liant (4) est effectuée dans une atmosphère de gaz inerte ou dans une atmosphère réductrice ou sous vide poussé.
